# EUROPÄISCHE PATENTANMELDUNG

(11) **EP 1 632 128 A1**
(43) Veröffentlichungstag der Anmeldung: **08.03.2006**
(21) Anmeldenummer: 05014911.1
(22) Anmeldetag: 09.07.2005
(51) Int. Cl.: A01D 75/18

(54) **Verfahren und Vorrichtung zur Einstellung der Empfindlichkeit einer Fremdkörpererkennungseinrichtung**

(30) Priorität: 01.09.2004 DE 102004042620
(71) Anmelder: CLAAS Selbstfahrende Erntemaschinen GmbH, 33428 Harsewinkel (DE)
(72) Erfinder: Brune, Markus, 33428 Marienfeld (DE)

(57) **Zusammenfassung**

Die Erfindung betrifft ein Verfahren und eine Vorrichtung zur Einstellung der Empfindlichkeit einer Erkennungseinrichtung (17) für Fremdkörper (23) innerhalb einer landwirtschaftlichen Erntemaschine (1), wodurch trotz unterschiedlicher und ständig wechselnder Erntebedingungen Störsignale eliminiert werden, so dass fehlerhafte Schnellstops der Arbeitsaggregate (8, 9) und eine Unterbrechung der Erntefahrt vermieden werden.

## Beschreibung

Die Erfindung betrifft ein Verfahren und eine Vorrichtung zur Einstellung der Empfindlichkeit einer Erkennungseinrichtung für Fremdkörper innerhalb einer landwirtschaftlichen Erntemaschine nach den Oberbegriffen der Ansprüche 1 und 10.

Landwirtschaftliche Erntemaschinen sind während der Erntefahrt erheblichen Belastungen ausgesetzt. So werden sämtliche Arbeitsaggregate wie beispielsweise Schneidwerk, Vorpresswalzen oder die Häckseltrommel an einem selbstfahrenden Feldhäcksler durch das zu bearbeitende Erntegut stark beansprucht. Besondere Probleme werden durch auf dem Feldboden liegende Fremdkörper, wie Steine oder Äste hervorgerufen. Insbesondere Steine werden regelmäßig von dem Schneidwerk zusammen mit dem Erntegut eingezogen und von den Vorpresswalzen an die nachgeordnete Häckseltrommel weiter gefördert. Hierdurch entstehen oftmals starke Beschädigungen an den auf der Häckseltrommel angeordneten Häckselmessem, wodurch die Erntefahrt unterbrochen und die beschädigten Häckselmesser in einem zeit- und kostenaufwendigen Verfahren ausgetauscht werden müssen.

Die EP 0 217 418 B1 offenbart eine Fremdkörpererkennungsvorrichtung für landwirtschaftliche Erntemaschinen, wobei ein beweglicher Beschleunigungsmesser einer beweglichen Fördervorrichtung zugeordnet und senkrecht in Richtung des geförderten Erntegutstranges angeordnet ist. Die Messrichtung des Beschleunigungssensors liegt dabei in Richtung der aufgrund des fließenden Erntegutstroms erfolgenden Verschiebung des beweglichen Teils der Fördervorrichtung. In einer Datenerfassungs- und Auswerteeinheit ist ein Schwellwert für eine zuvor zu definierende maximal zulässige Auslenkbeschleunigung des beweglichen Teils der Fördervorrichtung festgelegt. Wird nun festgestellt, dass die tatsächliche Auslenkbeschleunigung des beweglichen Teils der Fördervorrichtung über diesem Schwellwert liegt, wird ein Schnellstop ausgelöst, so dass sämtliche Arbeitsaggregate innerhalb der landwirtschaftlichen Erntemaschine zum Stillstand kommen.

Nachteilig an der in der EP 0 217 418 B1 offenbarten Ausführung ist, dass schnelle Auslenkungen ebenso aufgrund großer Mengen eingezogenen Erntegutes hervorgerufen werden können, so dass ein Schnellstop in diesen Fällen unnötiger Weise ausgelöst werden würde. Der Fahrer der landwirtschaftlichen Erntemaschine hat darüber hinaus keine Möglichkeit auf erntegutabhängige Veränderungen zu reagieren. Eine kurzfristige Anpassung des Beschleunigungsschwellwertes an die aktuellen Ernteanforderungen kann nicht erfolgen. Die Anpassung wird beispielsweise bei wechselnder Erntegutart erforderlich. So hat Gras eine andere Verdichtbarkeit als Mais, so dass die Auslenkung des beweglichen Teils der Fördervorrichtung bei unterschiedlichen Erntegutarten unterschiedlich stark erfolgt. Insbesondere bei der Verarbeitung von zu einem Schwad auf dem Feldboden abgelegten Gras unterliegt die Fördervorrichtung größeren Auslenkungsschwankungen, da der Schwad häufig ungleichmäßig geformt ist und Gras im allgemeinen zur Bildung von zusammenhaftenden Grasklumpen neigt.

Es ist daher Aufgabe der zugrundeliegenden Erfindung, ein Verfahren und eine Vorrichtung zu schaffen, die trotz unterschiedlicher und ständig wechselnder Erntebedingungen Fremdkörper rechtzeitig erkennt, bevor diese in das Innere der Erntemaschine wandern und überdies Störsignale eliminiert, so dass fehlerhafte Schnellstops vermieden werden.

Diese Aufgabe wird erfindungsgemäß durch die kennzeichnenden Merkmale der Patentansprüche 1 und 10 gelöst, wobei in den weiteren Patentansprüchen Merkmale aufgeführt sind, die diese Lösung in vorteilhafter Weise weiterentwickeln.

Indem die Empfindlichkeit der Erkennungseinrichtung für Fremdkörper einstellbar ist, wird die Erkennungseinrichtung auf die aktuellen Erntebedingungen abgestimmt und hierdurch eine höhere Sicherheit in der Fremdkörpererkennung erzielt. Insbesondere wird zwischen Beschleunigungen der z.B. Vorpresswalzen an einem selbstfahrenden Feldhäcksler aufgrund von Erntegutschwankungen oder aufgrund von Fremdkörpern unterschieden, so dass kein fehlerhafter Schnellstop der Vorpresswalzen ausgelöst wird.

In vorteilhafter Weiterbildung der Erfindung kann die Einstellung der Empfindlichkeit unmittelbar und ohne Zeitverlust während des Erntebetriebes vorgenommen werden kann.

Dadurch, dass die Empfindlichkeit der Erkennungseinrichtung für Fremdkörper in Abhängigkeit von mindestens einem Schwellwert― wie Erntegutfeuchte, Erntegutart, Durchsatzmenge, Einzugsgeschwindigkeit oder Drehzahl der Arbeitsaggregate - einstellbar ist, wird der Fahrer der landwirtschaftlichen Erntemaschine entlastet, indem eine genaue und auf die aktuellen Erntebedingungen abgestimmte Einstellung gewährleistet ist.

Dadurch, dass die Schwellwerte festgelegt werden können, hat der Fahrer die Möglichkeit die Sensibilität der Erkennungseinrichtung für Fremdkörper nach seinem Ermessen zu steuern. Es ist darüber hinaus aber auch denkbar, dass die Schwellwerte selbsttätig über eine Regelelektronik festgelegt werden, so dass der Fahrer von einer Kontrolle der Schwellwerte entbunden wird und sich allein auf die Erntefahrt konzentrieren kann.

Indem ein Steuergerät die Signale der Empfindlichkeitseinstelleinrichtung und der Erkennungseinrichtung für Fremdkörper empfängt, vergleicht, hinterlegt und in Abhängigkeit von den Schwellwerten den Schnellstop wenigstens eines Arbeitsaggregates auslöst, werden Störsignale, die zu einem fehlerhaften Schnellstop führen würden, vermieden. Insbesondere die Anpassbarkeit des Schwellwertes macht es möglich eine optimale Einstellung des Schwellwertes und effiziente Erntefahrt durchzuführen, wobei Veränderungen hinsichtlich der Erntebedingungen keinen negativen Einfluss auf die Fremdkörpererkennung haben, indem diese eliminiert werden und keinen Schnellstop auslösen.

Da der Stillstand des zumindest einen Arbeitsaggregates, welches insbesondere die bewegbare Vorpresswalze an einem selbstfahrenden Feldhäcksler ist, in Abhängigkeit von der vertikalen Beschleunigung dieses Arbeitsaggregates erfolgt, wird der Fremdkörper frühzeitig an einer Stelle des Feldhäckslers sensiert, an der noch kein Schaden innerhalb des Feldhäckslers durch den Fremdkörper verursacht werden kann, da die starke und plötzliche Beschleunigung der Vorpresswalze den Einzug eines Fremdkörpers indiziert und der Schnellstop rechtzeitig ausgelöst wird, ohne dass der Fremdkörper die nachgeordneten Arbeitsaggregate, wie beispielsweise eine Häckseltrommel, erreicht.

Ein besonders effektiver Schutz vor fehlerhaften Schnellstops wird dadurch erreicht, indem der Erkennungseinrichtung für Fremdkörper eine Einstelleinrichtung zugeordnet ist. Hierdurch werden die Signale der Einstelleinrichtung unmittelbar an die Erkennungseinrichtung übergeben, so dass die Einstellung ohne zeitliche Verzögerung und präzise erfolgt.

Indem die Erkennungseinrichtung für Fremdkörper gegenüber dem wenigstens einen bewegbaren Arbeitsaggregat verstellbar ist, kann die Erkennungseinrichtung so eingestellt werden, dass geringfügigere, durch die Bewegung des Arbeitsaggregates, ausgelöste Fehlsignale ignoriert werden, ohne dass ein unnötiger Schnellstop erfolgt.

Dadurch, dass die Erkennungseinrichtung für Fremdkörper aus einem Gehäuse, in dem ein mittels eines Spannelementes unter Vorspannung gesetzter bewegbarer Hebel angeordnet ist, zusammengesetzt ist, werden auf kostengünstige Weise und mit geringem Fertigungsaufwand die Beschleunigungssignale des Arbeitsaggregates sensiert und für die genaue Einstellung der Empfindlichkeit der Erkennungseinrichtung für Fremdkörper verwendet, um einen erforderlichen Schnellstop auszulösen.

Zur Messung der für den Schnellstop ausschlaggebenden Signale kann kostengünstig dem Hebel ein Beschleunigungssensor oder ein Drehpotentiometer zugeordnet werden.

Weitere vorteilhafte Ausgestaltungen sind Gegenstand weiterer Unteransprüche und werden nachfolgend anhand einer Zeichnung näher erläutert.
Es zeigt:

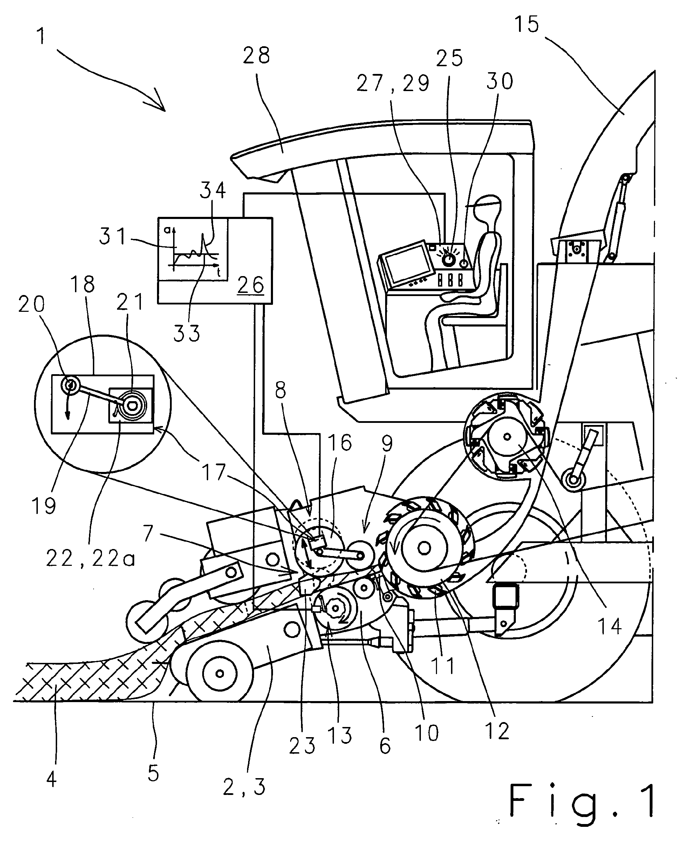

- Figur 1:: die schematische Darstellung eines selbstfahrenden Feldhäckslers in Seitenansicht

Figur 1 zeigt eine schematische Darstellung eines selbstfahrenden Feldhäckslers 1 in Seitenansicht als ein Anwendungsbeispiel des erfindungsgemäßen Verfahrens und der erfindungsgemäßen Vorrichtung.
Das frontseitig am Feldhäcksler 1 montierte Vorsatzgerät 2, welches vorliegend als Pick-up 3 ausgebildet ist, ist in Abhängigkeit von der jeweiligen Erntegutart 4 austauschbar und dient dazu das Erntegut 4 vom Feldboden 5 aufzunehmen und den nachgeordneten Arbeitsaggregaten 8, 9 zuzuführen.
Das mehrere Meter breite Vorsatzgerät 2 führt das aufgenommene Erntegut 4 in einen wesentlich schmaleren, der Breite des Förderkanals 6 entsprechenden Einzugsbereich 7 zusammen.
Über diesen Einzugsbereich 7 wird das Erntegut 5 von einem ersten Vorpresswalzenpaar 8 angenommen und verdichtet. Dem ersten Vorpresswalzenpaar 8 ist ein zweites Vorpresswalzenpaar 9 nachgeordnet, welches das vorverdichtete Erntegut 4 weiter zu einem Erntegutstrang verdichtet und den Erntegutstrang über eine Gegenschneide 10 den Häckselmessern 11 der Häckseltrommel 12 zuführt. An der unmittelbar vor der Häckseltrommel 12 angeordneten Gegenschneide 10 wird das Erntegut 4 von den Häckselmessern 11 zerschnitten und von dem der Häckseltrommel 12 nachgeordneten Nachbeschleuniger 14 beschleunigt und über einen sich anschließenden Auswurfkrümmer 15 aus dem Feldhäcksler 1 gefördert.

Der bewegbaren Vorpresswalze 16 des ersten Vorpresswalzenpaares 8 ist eine Erkennungseinrichtung 17 für Fremdkörper 23 zugeordnet, deren Aufgabe es ist, im Erntegutstrom enthaltene Fremdkörper 23 - wie beispielsweise Steine 23 - zu erkennen und einen Schnellstop der Arbeitsaggregate 8, 9 einzuleiten, um auf diese Weise Beschädigungen an den Arbeitsaggregaten 8, 9, 11, 12 zu vermeiden. Nach Erkennung eines Fremdkörpers 23 und Auslösen des Schnellstops wird vom Fahrer des Feldhäckslers 1 der Reversiervorgang eingeleitet und der Fremdkörper 23 wird zusammen mit dem bereits aufgenommenen Erntegut 4 aus dem Feldhäcksler 1 heraus gefördert. Der Fahrer entfernt sodann den Fremdkörper 23 aus dem Erntegut 4 und setzt im Anschluss hieran die Erntefahrt fort.

Die der Vorpresswalze 16 zugeordnete Erkennungsvorrichtung 17 ist zusammengesetzt aus einem Gehäuse 18 in dem ein bewegbarer Hebel 19 integriert ist. Die Bewegungsrichtung des Hebels 19 ist durch Pfeile gekennzeichnet. An dem freien Ende des Hebels 19 kann eine Masse 20 angeordnet sein, die die Bewegung des Hebels 19 unterstützt.
Aufgrund der Zuordnung der Erkennungseinrichtung 17 zu der beweglichen Vorpresswalze 16 vollzieht die Erkennungseinrichtung 17 die vertikale Beschleunigung der beweglichen Vorpresswalze 16 nach. Das heißt, verändert sich die eingezogene Erntegutmenge 4 während der Erntefahrt, bewegt sich die Vorpresswalze 16 entsprechend der veränderten Schichtdicke der Emtegutmatte auf- oder abwärts. Die Bewegung der Vorpresswalze 16 ist bei einer homogenen Erntegutmenge ausgeglichen. Hingegen bewegt sich die Vorpresswalze 16 bei einer uneinheitlichen Emtegutmatte stärker auf- und abwärts.
Wird nun ein Fremdkörper 23 zusammen mit dem Erntegut 4 aufgenommen, beaufschlagt der aufgenommene Fremdkörper 23 die Vorpresswalze 16. Da Fremdkörper 23, wie beispielsweise Steine 23, innerhalb der Erntemaschine 1 nicht verdichtet werden können, ist beim Zusammenprall von Stein 23 und Vorpresswalze 16, die vertikale Beschleunigung der Vorpresswalze 16 höher als die Beschleunigung der Vorpresswalze 16 bei der Verdichtung von uneinheitlichen Erntegutmengen. Demgemäss wird die Vorpresswalze 16 direkt und schlagartig durch den Fremdkörper aufwärts ausgelenkt.
Die vertikale Beschleunigung der Vorpresswalze 16 wird von der der Vorpresswalze 16 zugeordneten Erkennungseinrichtung 17 für Fremdkörper 23 unmittelbar nachvollzogen. Der in dem Gehäuse 18 bewegbar integrierte Hebel 19 bleibt beim Einsetzen der Beschleunigung des Gehäuses 18 zunächst wegen seiner lagerungsbedingten Trägheit für einen sehr kurzen Zeitpunkt stehen, bevor der Hebel 19 die Beschleunigung des Gehäuses 18 verzögert nachvollzieht. Die an dem freien Ende des Hebels 19 angeordnete Masse 20 hat dabei die Funktion die Trägheit des Hebels 19 zu verstärken. Dadurch, dass die Beschleunigung des Gehäuses 18 während des Beschleunigungsvorgangs allmählich nachlässt und die Beschleunigung des Hebels 19 im Verhältnis zu der nachlassenden Beschleunigung des Gehäuses 18 ansteigt, holt der in Pfeilrichtung aufwärtig verfahrende Hebel 19 das beschleunigte Gehäuse 18 ein und schlägt gegen die Innenwand des Gehäuses 18.

Damit kleinere Auslenkungen oder Vibrationen der Vorpresswalze 16, die unter anderem durch Bodenunebenheiten ausgelöst werden können, keine Auswirkungen auf die Genauigkeit der Signalgenerierung haben, hat es sich als vorteilhaft erwiesen dem Hebel 19 ein Spannelement 21, beispielsweise in Form einer Feder, zuzuordnen. Unter Zuhilfenahme des Spannelementes 21 wird der Hebel 19 unter eine definierte Vorspannung gesetzt, so dass kleinere Beschleunigungswerte der Vorpresswalze 16 keine Bewegung bzw. Beschleunigung des Hebels 19 auslösen, wodurch auf einfache Weise Fehlstops vermieden werden.

Um die Beschleunigung der Vorpresswalze 16 zu ermitteln, ist dem Hebel 19 in einer ersten Ausführungsform ein Beschleunigungssensor 22 zugeordnet. Vollzieht nun der Hebel 19 mit der Masse 20 der Bewegung des Gehäuses 18 verzögert nach, erkennt der Beschleunigungssensor 22 aufgrund der Auslenkung des Hebels 19 die Beschleunigung, die die Vorpresswalze 16 erfahren hat. Das sensierte Beschleunigungssignal wird dann an ein mit der Erkennungseinrichtung 17 für Fremdkörper 23 verbundenes Steuergerät 26 übergeben und in dem Steuergerät 26 hinterlegt
In einer weiteren Ausführungsform können zur Messung der Beschleunigung der Vorpresswalze 16 auch andere Sensoren, wie beispielsweise ein Drehpotentiometer 22 a, verwendet werden.

Das Steuergerät 26 ist außerdem mit einer Empfindlichkeitseinstelleinrichtung 27 und einer Schnellstopeinrichtung 13 verbunden. Die Empfindlichkeitseinstellvorrichtung 27 regelt die Einstellung der Empfindlichkeit der Erkennungseinrichtung 17 für Fremdkörper 23. In dieser Empfindlichkeitseinstellvorrichtung 27 werden erfindungsgemäß Schwellwerte in Abhängigkeit von Erntegut- oder Maschinenparametern als Grundlage für eine Einstellung der Empfindlichkeit der Erkennungseinrichtung 17 für Fremdkörper 23 eingegeben, so dass ein definierter Schwellwert von dem Fahrer der Erntemaschine 1 direkt festgelegt werden kann und nach dem Ermessen des Fahrers veränderbar ist. Als solche Schwellwerte kommen insbesondere Erntegutfeuchte, Erntegutart, Durchsatzmenge oder die Einzugsgeschwindigkeit bzw. die Drehzahl der Arbeitsaggregate 8, 9 in Betracht. Die Erntegutfeuchte, Erntegutart und Durchsatzmenge haben Einfluss auf die Verdichtbarkeit des Emteguts 4 und somit auf die Auslenkung der jeweiligen Vorpresswalze 16. So ist beispielsweise feuchtes Erntegut 4 leichter zu verdichten als trockenes Erntegut 4, ebenso ist Gras leichter zu verdichten als Mais. Die Einzugsgeschwindigkeit bzw. die Drehzahl der Vorpresswalzen 8, 9 ist entscheidend für die Auslösung des Schnellstops. Das bedeutet, erhöht sich die Einzugsgeschwindigkeit bzw. die Drehzahl der Vorpresswalzen 8, 9 verkürzt sich die Reaktionszeit zum Auslösen des Schnellstops.
Durch die Einstellung der Schwellwerte kann daher eine rechtzeitige und sichere Erkennung von Fremdkörpern 23 gewährleistet werden.
Die Empfindlichkeitseinstelleinrichtung 27 kann so ausgelegt werden, dass die Schwellwerte von dem Fahrer des selbstfahrenden Feldhäckslers 1 von der Kabine 28 aus über ein Bedienfeld 29 manuell eingegeben oder, in nachfolgend noch näher beschriebener Weise, selbsttätig in Abhängigkeit von den von der Erkennungseinrichtung 17 für Fremdkörper 23 generierten Istwerten angepasst und in dem Steuergerät 26 zur Ermittlung eines Schwellwertes zur Auslösung des Schnelistops hinterlegt werden.

Das mit der Empfindlichkeitseinstellvorrichtung 27 verbundene Steuergerät 26 empfängt und hinterlegt die von der Empfindlichkeitseinstellvorrichtung 27 generierten Signale bzw. Schwellwerte und vergleicht diese Schwellwerte mit den aktuellen Istwerten, die von der Erkennungseinrichtung 17 an das Steuergerät 26 übergeben werden. Zur Verdeutlichung ist in der Figur 1 ein Diagramm eingefügt, welches die Signalverarbeitung wiedergibt. Auf der y ― Achse ist die Beschleunigung a der Vorpresswalze 16 abgebildet und auf der x - Achse die Zeit t in der die Vorpresswalze 16 beschleunigt wird. Der Fahrer des Feldhäckslers 1 gibt einen Schwellwert 33 ein. Der Schwellwert 33 legt die maximal zulässige Beschleunigung der Vorpresswalze 16 fest. Liegt der tatsächliche Beschleunigungswert über diesen Schwellwert 33 generiert das Steuergerät 26 ein Signal an die Schnellstopeinrichtung 13 und der Schnellstop wird in an sich bekannter Weise ausgelöst. Um Fehleinstellungen durch den Fahrer zu Vermeiden kann ein unterer Schwellwert als Sicherheitseinstellung hinterlegt werden, wodurch eine bestimmte Grundeinstellung nie unterschritten werden kann und Fremdkörper 23 mit einer Mindestgröße stets erkannt werden, selbst wenn der Fahrer des Feldhäckslers 1 eine fehlerhafte niedrigere Einstellung gewählt hat.
Sämtliche Beschleunigungswerte, die unterhalb des Schwellwertes 33 liegen sind zulässige Beschleunigungswerte, die durch Bodenunebenheiten oder unterschiedlich verdichtete Erntegutmengen hervorgerufen werden, so dass in diesen Fällen kein Schnellstop ausgelöst wird.

Es liegt im Rahmen der Erfindung, dass die Schwellwerte regelmäßig überprüft werden und in Abhängigkeit von den überprüften Schwellwerten eine Anpassung des aktuell eingestellten Schwellwertes durch das Steuergerät 26 durchgeführt wird, um die Sensibilität der Schnellstopeinrichtung 13 optimal einzustellen. Dies ist insbesondere dann von Vorteil, wenn mit unterschiedlicher Einzugsgeschwindigkeit uneinheitliche Emtegutmengen eingezogen und bearbeitet werden. Hierdurch unterliegt die Vorpresswalze 16 stärkeren Auslenkungen, die bei zu niedrig eingestelltem Schwellwert zum permanenten Auslösen des Schnellstops führen könnten.

Es liegt im Rahmen des Könnens eines Fachmanns das beschriebene Ausführungsbeispiel in nicht dargestellter Weise abzuwandeln oder in anderen Maschinen einzusetzen, um die beschriebenen Effekte zu erzielen, ohne dabei den Rahmen der Erfindung zu verlassen.

### Bezugszeichenliste:

- 1: selbstfahrender Feldhäcksler
- 2: Vorsatrgerät
- 3: Pick-up
- 4: Erntegut
- 5: Feldboden
- 6: Förderkanal
- 7: Einzugsbereich
- 8: erstes Vorpresswalzenpaar
- 9: zweites Vorpresswalzenpaar
- 10: Gegenschneide
- 11: Häckselmesser
- 12: Häckseltrommel
- 13: Schnellstopeinrichtung
- 14: Nachbeschleuniger
- 15: Auswurfkrümmer
- 16: bewegbare Walze
- 17: Erkennungseinrichtung
- 18: Gehäuse
- 19: Hebel
- 20: Masse
- 21: Spannelement
- 22: Beschleunigungssensor
- 22a: Drehpotentiometer
- 23: Fremdkörper
- 25: Potentiometer
- 26: Steuergerät
- 27: Empfindlichkeitseinstelleinrichtung
- 28: Kabine
- 29: Bedienfeld
- 30: Signalleuchte
- 31: Einstellbereich
- 33: Schwellwert
- 34: Beschleunigungskurve

## Patentansprüche

1. Verfahren zum Auslösen des Stillstands wenigstens eines Arbeitsaggregates innerhalb einer landwirtschaftlichen Erntemaschine, wobei dem zumindest einen Arbeitsaggregat eine Erkennungseinrichtung für Fremdkörper sowie ein Steuergerät innerhalb des in der landwirtschaftlichen Erntemaschine bewegten Ernteguts zugeordnet ist,
**dadurch gekennzeichnet, dass**
die Empfindlichkeit der Erkennungseinrichtung (17) für Fremdkörper (23) einstellbar ist.

2. Verfahren zum Auslösen des Stillstands wenigstens eines Arbeitsaggregates innerhalb einer landwirtschaftlichen Erntemaschine nach Anspruch 1,
**dadurch gekennzeichnet, dass**
die Empfindlichkeit der Erkennungseinrichtung (17) für Fremdkörper (23) während des Emtebetriebes veränderbar ist.

3. Verfahren zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
die Empfindlichkeit der Erkennungseinrichtung (17) für Fremdkörper (23) in Abhängigkeit von mindestens einem Schwellwert veränderbar ist.

4. Verfahren zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
die Schwellwerte die Erntegutfeuchte, Erntegutart, Durchsatzmenge und/oder die Einzugsgeschwindigkeit oder Drehzahl des zumindest einen Arbeitsaggregates (8, 9) sind.

5. Verfahren zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
die Schwellwerte manuell oder selbsttätig festgelegt werden können.

6. Verfahren zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
die Signale zur Einstellung der Empfindlichkeit der Erkennungseinrichtung (17) für Fremdkörper (23) in einem Steuergerät (26) empfangen, verglichen, hinterlegt und in Abhängigkeit von den Schwellwerten den Schnellstop wenigstens eines Arbeitsaggregates (8, 9) auslöst.

7. Verfahren zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
bei Überschreiten der Schwellwerte der Stillstand wenigstens eines Arbeitsaggregates (8, 9) ausgelöst wird.

8. Verfahren zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
der Stillstand wenigstens eines Arbeitsaggregates (8, 9) in Abhängigkeit von der vertikalen Beschleunigung des wenigstens einen Arbeitsaggregate (8, 9) erfolgt.

9. Vorrichtung zum Auslösen des Stillstands wenigstens eines Arbeitsaggregates innerhalb einer landwirtschaftlichen Erntemaschine, wobei dem zumindest einen Arbeitsaggregat eine Erkennungseinrichtung für Fremdkörper sowie ein Steuergerät innerhalb des in der landwirtschaftlichen Erntemaschine bewegten Emteguts zugeordnet ist,
**dadurch gekennzeichnet, dass**
der Erkennungseinrichtung (17) für Fremdkörper (23) eine Empfindlichkeitseinstellvorrichtung (27) zugeordnet ist.

10. Vorrichtung zum Auslösen des Stillstandes wenigstens eines Arbeitsaggregates innerhalb einer landwirtschaftlichen Erntemaschine nach Anspruch ,
**dadurch gekennzeichnet, dass**
zwischen der Erkennungseinrichtung (17) für Fremdkörper (23) und der Empfindlichkeitseinstellvorrichtung (27) ein Steuergerät (26) angeordnet ist.

11. Vorrichtung zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
das Steuergerät (26) den in der Empfindlichkeitseinstellvorrichtung (27) hinterlegten Schwellwert mit dem in der Erkennungseinrichtung (17) für Fremdkörper (23) sensierten Istwert vergleicht und bei Überschreiten des Schwellwertes den Stillstand wenigstens eines Arbeitsaggregates (8, 9) auslöst.

12. Vorrichtung zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
das wenigstens eine Arbeitsaggregat (8, 9) die Vorpresswalzen (8, 9) an einem selbstfahrenden Feldhäcksler (1) sind.

13. Vorrichtung zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
die Erkennungseinrichtung (17) für Fremdkörper (23) aus einem Gehäuse (18), in dem ein mittels eines Spannelementes (21) unter Vorspannung gesetzter bewegbarer Hebel (19) angeordnet ist, zusammengesetzt ist.

14. Vorrichtung zum Auslösen des Stillstands wenigstens eines Arbeitsaggregates innerhalb einer landwirtschaftlichen Erntemaschine nach einem oder mehreren der vorangegangenen Ansprüche,
**dadurch gekennzeichnet, dass**
dem Hebel (19) ein Beschleunigungssensor (22) oder ein Drehpotentiometer (22a) zugeordnet ist.

15. Vorrichtung zum Auslösen des Stillstandes wenigstens eines Arbeitsaggregates innerhalb einer landwirtschaftlichen Erntemaschine nach Anspruch ,
**dadurch gekennzeichnet, dass**
die Erkennungseinrichtung (17) für Fremdkörper (23) mindestens einem bewegbaren Arbeitsaggregat (16) zugeordnet ist.

16. Vorrichtung zum Auslösen des Stillstandes wenigstens eines Arbeitsaggregates innerhalb einer landwirtschaftlichen Erntemaschine nach Anspruch ,
**dadurch gekennzeichnet, dass**
die Erkennungseinrichtung (17) für Fremdkörper (23) gegenüber dem wenigstens einen bewegbaren Arbeitsaggregat (16) verstellbar ist.

17. Vorrichtung zum Auslösen des Stillstandes wenigstens eines Arbeitsaggregates innerhalb einer landwirtschaftlichen Erntemaschine nach Anspruch ,
**dadurch gekennzeichnet, dass**
der der Erkennungseinrichtung (17) für Fremdkörper (23) zugeordnete Hebel (19) die Bewegung des bewegbaren Arbeitsaggregates (16) nachvollzieht.
